# EUROPÄISCHE PATENTSCHRIFT

(11) **EP 2 651 696 B1**
(45) Veröffentlichungstag und Bekanntmachung des Hinweises auf die Patenterteilung: **20.05.2015**
(21) Anmeldenummer: 11788897.4
(22) Anmeldetag: 02.12.2011
(51) Int. Cl.: B60R 16/023, B60Q 1/14, G06K 9/00

(54) **VERFAHREN ZUR ERKENNUNG EINER NASSEN STRASSE**
METHOD FOR DETECTING A WET ROAD
PROCÉDÉ DE DÉTECTION D'UNE ROUTE MOUILLÉE

(30) Priorität: 14.12.2010 DE 102010063017
(43) Veröffentlichungstag der Anmeldung: 23.10.2013
(73) Patentinhaber: Robert Bosch GmbH, 70442 Stuttgart (DE)
(72) Erfinder: HEGER, Thomas, 71229 Leonberg (DE); HELMLE, Michael, 73732 Esslingen (DE)
(86) Internationale Anmeldenummer: PCT/EP2011/071628
(87) Internationale Veröffentlichungsnummer: WO 2012/080005

(56) Entgegenhaltungen:
- EP-A2- 0 443 185
- DE-A1-102008 011 699
- DE-A1-102009 030 431
- JP-A- 2007 322 231
- JP-A- 2009 035 067
- US-A1- 2009 046 894

## Beschreibung

### Stand der Technik

Die Erfindung betrifft Verfahren in einem Fahrerassistenzsystem eines Fahrzeugs zur Erkennung von Nässe auf einer Fahrbahn, sowie ein entsprechendes Fahrerassistenzsystem.

Ein Fahrerassistenzsystem stellt eine oder mehrere Zusatzeinrichtungen in einem Fahrzeug zur Unterstützung des Fahrers in bestimmten Fahrsituationen bereit. Solche Zusatzeinrichtungen sind beispielsweise ABS (Antiblockiersystem), ESP (Elektronisches Stabilitätsprogramm), ein Abstandsregeltempomat ("Adaptive Cruise Control", ACC) oder ein Parkassistenzsystem.

Zum Bereich der Fahrerassistenz gehört auch der Einsatz eines Regensensors zum automatischen Einschalten der Scheibenwischer eines Fahrzeugs bei Regen. Hierzu offenbart die DE 103 16 794 A1 einen Regensensor, der eine Kamera umfasst. Die Kamera ist aus dem Innenraum heraus auf ein fahrzeugfestes Objekt vor der Windschutzscheibe gerichtet, beispielsweise die Kühlerhaube. Das von der Kamera aufgenommene Bild wird mit einem gespeicherten Bild verglichen, das bei trockener Windschutzscheibe aufgenommen wurde. Aus dem Vergleich der Bilder wird das Vorhandensein von Feuchtigkeit, etwa in Form von Tropfen, auf der Windschutzscheibe erkannt.

Der vorstehend beschriebene Regensensor hat allerdings den Nachteil, dass er i.w. nur auf Regen anspricht. Regnet es nicht (mehr), detektiert der Regensensor folglich Trockenheit. Ein derartiger Sensor ist für eine Steuerung der Scheibenwischer brauchbar, kann jedoch kaum sinnvoll zur Steuerung anderer Fahrzeugkomponenten eingesetzt werden, bei denen eine Anpassung an Feuchtigkeit in einer Fahrzeugumgebung sinnvoll wäre. Aus den Daten des Regensensors kann bspw. keine automatische Steuerung zur Reaktion auf eine nasse Fahrbahn abgeleitet werden: Die Fahrbahn könnte noch oder schon nass sein, auch wenn es momentan nicht regnet.

Die DE 101 497 68 A1 beschreibt ein Verfahren zum Bestimmen der Sichtweite eines an einer Vorderseite eines Fahrzeugs angebrachten Laserscanners. Ein Sensor empfängt von dem Scanner in einen Überwachungsbereich vor dem Fahrzeug ausgesendete und von dort reflektierte Strahlung. Eine Auswerteeinrichtung wertet die reflektierte Strahlung aus. Störungen wie Nebel, Regen oder die Gischt eines vorausfahrenden Fahrzeugs werden erkannt. In Reaktion auf die Erkennung werden Maßnahmen getroffen; diese können beilspielsweise einen Eingriff in den Fahrzeugbetrieb beinhalten, etwa eine Reduzierung der momentanen Fahrzeuggeschwindigkeit oder einer vorgegebenen Höchstgeschwindigkeit.

Der vorstehend beschriebene Scanner gibt zuverlässiger als ein Regensensor Auskunft über möglicherweise vorhandene Nässe auf der Fahrbahn. Allerdings ist ein derartiges System kompliziert und damit teuer.

### Offenbarung der Erfindung

Erfindungsgemäß wird ein Verfahren in einem Fahrerassistenzsystem eines Fahrzeugs zur Erkennung von Nässe auf einer Fahrbahn vorgeschlagen, wobei das Fahrerassistenzsystem eine Rückfahrkamera aufweist. Das Verfahren umfasst die folgenden Schritte: Aufnehmen eines Bildes eines hinter einem Heck des Fahrzeugs gelegenen Bereichs mit der Rückfahrkamera; Auswerten des aufgenommenen Bildes auf das Vorhandensein einer vom Fahrzeug hervorgerufenen Gischtschleppe; und selektives Ausgeben, basierend auf der Auswertung, eines Nässesignals zum Auslösen einer automatischen Reaktion des Fahrerassistenzsystems auf die nasse Fahrbahn, wobei die automatische Reaktion mindestens eines der folgenden Subsysteme (208, 210) des Fahrerassistenzsystems (104, 108) betrifft: Antiblockiersystem, Antriebsschlupfregelung, Elektronisches Stabilitätsprogramm, elektronischer Bremsassistent, Fahrdynamikregeiungssysteme, Elektronische Stabilitätssteuerungen.

Unter einer Fahrbahn sollen alle Arten von befestigten und unbefestigten Oberflächen verstanden werden, auf denen sich das fragliche Fahrzeug bewegen kann. Die durch eine positive Erkennung ausgelöste automatische Reaktion kann etwa ein automatisches Ein- oder Ausschalten der Scheibenwischer des Fahrzeugs. Zusätzlich kann die automatische Reaktion ein Ein- oder Ausschalten der Fahrzeugscheinwerfer betreffen. Abhängig von gesetzlichen Vorschriften kann basierend mit dem Nässesignal auch eine Nebelschlussleuchte ein- oder ausgeschaltet werden. Das Nässesignal kann zur Steuerung (Öffnen oder Schließen) von Fahrzeugfenstern verwendet werden. Das Nässesignal kann zur Ansteuerung einer Klimaanlage verwendet werden, die in Reaktion auf die Detektion einer nassen Fahrbahn umkonfiguriert werden kann, um bevorzugt die Fahrzeugfenster beschlagfrei zu halten.

Die automatische Reaktion kann zusätzlich auch die Ausgabe einer Warnung an den Fahrer beinhalten, dass die Fahrbahnnässe beispielsweise einen vorgegebenen Schwellenwert überschritten hat. Als Beispiel sei eine Warnung vor möglichem Aquaplaning genannt.

Das Aufnehmen und/oder die Auswertung des Bildes kann in Reaktion auf eine Detektion eines Ereignisses wie beispielsweise dem Erreichen einer regelmäßigen Zeitmarke durchgeführt werden. In einem Beispiel wird in regelmäßigen Abständen von einer Minute ein Bild der Rückfahrkamera ausgewertet. Als weitere oder alternative Bedingung kann eine positive Detektion einer Vorwärtsbewegung des Fahrzeugs erforderlich sein. Zusätzlich kann auch eine vorbestimmte Mindestgeschwindigkeit von z.B. 30 Kilometern pro Stunde vorgesehen sein, unterhalb derer keine Aufnahme und/oder Auswertung nach dem Vorhandensein einer Gischtschleppe erfolgt. Zusätzlich oder alternativ kann eine Aufnahme und/oder Auswertung auch nur erfolgen, wenn ein zusätzlich vorhandener Regensensor Regen oder bspw. Feuchtigkeit auf der Windschutzscheibe detektiert hat.

Das Vorhandensein einer vom Fahrzeug hervorgerufenen Gischtschleppe wird durch Auswertung des Bildes, oder aber Auswertung einer Sequenz zeitlich aufeinanderfolgender Bilder detektiert. Entsprechende Bildauswertungsalgorithmen können beispielsweise darauf abstellen, dass eine Gischtschleppe das Blickfeld einer Rückfahrkamera eine nur teilweise ausfüllt, d.h. lokale Ausdehnung hat, im Gegensatz etwa zu Nebel oder Regen: Diese Erscheinungen beeinflussen das gesamte Bild. Ein weiteres Charakteristikum einer Gischtschleppe im Unterschied zu etwa Nebel oder Regen besteht in der dynamischen, d.h. zeitlich stark veränderlichen Ausdehnung, Form und/oder Kontur der Gischtschleppe. Weiterhin ist es auch denkbar, eine Gischtschleppe basierend auf deren von einer Fahrzeuggeschwindigkeit abhängigen Ausdehnung, Form und/oder Kontur zu detektieren.

Bei bestimmten Ausführungsformen der Erfindung wird ein Nässesignal nur ausgegeben, wenn zusätzlich zu einer entsprechenden Auswertung des von der Rückfahrkamera aufgenommenen Bildes auch ein entsprechendes Signal eines Regensensors vorliegt, der das Vorhandensein von Regen (beispielsweise anhand von Feuchtigkeit auf der Windschutzscheibe) detektiert hat.

Bei den hier beschriebenen erfindungsgemäßen Verfahren wird eine Rückfahrkamera verwendet. Alternativ kann jedoch auch eine Frontkamera verwendet werden, die auf einen Bereich vor dem Fahrzeug ausgerichtet ist, um das Vorhandensein einer Gischtschleppe bei einem vorweg fahrenden Fahrzeug zu detektieren. Die Bildauswertungsalgorithmen wären entsprechend anzupassen.

Erfindungsgemäß wird weiterhin ein Computerprogramm vorgeschlagen, wobei eines der hierin beschriebenen Verfahren zur Ausführung kommt, wenn das Computerprogramm auf einer programmierbaren Computereinrichtung ausgeführt wird. Bei dieser Computereinrichtung kann es sich beispielsweise um ein Modul zur Implementierung eines Merkmals oder Subsystems eines Fahrerassistenzsystems in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung zum Herunterladen bereitgestellt werden, z.B. über ein Datennetzwerk wie etwa das Internet oder eine Kommunikationsverbindung wie etwa eine Telefonleitung oder eine drahtlose Verbindung.

Erfindungsgemäß wird weiterhin ein Fahrerassistenzsystem in einem Fahrzeug vorgeschlagen, welches zur Erkennung von Nässe auf einer Fahrbahn ausgebildet ist, und die folgenden Komponenten umfasst: eine Rückfahrkamera zum Aufnehmen eines Bildes eines hinter einem Heck des Fahrzeugs gelegenen Bereichs; einer Komponente zum Auswerten des aufgenommenen Bildes auf das Vorhandensein einer vom Fahrzeug hervorgerufenen Gischtschleppe; und eine Komponente zum selektiven Ausgeben, basierend auf der Auswertung, eines Nässesignals zum Auslösen einer automatischen Reaktion des Fahrerassistenzsystems auf die nasse Fahrbahn.

### Vorteile der Erfindung

Erfindungsgemäß wird u.a. vorgeschlagen, zur Erkennung von Nässe auf einer Fahrbahn eine Rückfahrkamera zu verwenden. Dies hat den Vorteil, dass auf den Einbau extra für diesen Zweck vorzusehender Komponenten, wie bspw. einen Laserscanner, verzichtet werden kann; eine Rückfahrkamera ist im Zusammenhang mit etwa einem Einparkassistenten in zunehmend mehr Fahrzeugen ohnehin vorhanden.

Im Blickfeld einer Rückfahrkamera erscheint eine eigene Gischtschleppe vergleichsweise prominent, ohne den Bildbereich ganz auszufüllen; somit sollte eine Detektion zuverlässiger möglich sein als etwa die Detektion einer weiter entfernten Gischtschleppe bei einem Vorderfahrzeug bzw. es können bereits kleinere Gischtschleppen bei geringer Feuchtigkeit auf der Strasse und/oder niedriger Geschwindigkeit detektiert werden. Es ist auch denkbar, in Reaktion auf verschieden intensive Gischtschleppen Abstufungen in der Reaktion vorzusehen, also eine graduelle Anpassung von Fahrzeugkomponenten an die Situation vorzunehmen.

Wenn ein Regensensor nicht anschlägt, weil es an der Position des Fahrzeugs momentan nicht regnet, kann die Fahrbahn dennoch nass sein (auch kann eine Fahrbahn aufgrund anderer Ursachen nass sein, bspw. bei Tauwetter); eine Anpassung eines hochentwickelten ABS oder ESP zur Anpassung an die nasse Fahrbahn ist daher basierend auf den Daten eines Regensensors nicht möglich. Mit der Erfindung wird jedoch vom Ego-Fahrzeug von der Fahrbahn aufgewirbelte und somit tatsächlich vorhandene Nässe auf der Fahrbahn erkannt (anstatt nur das Nicht/Vorhandensein von Feuchtigkeit auf einer Windschutzscheibe), und somit ist eine Ansteuerung von beispielsweise u.a. eine Fahrzeugsicherheit betreffenden Komponenten wie ABS oder ESP vorteilhaft möglich.

Nachdem meist keine zusätzlichen Hardwarekomponenten erforderlich sind, kann die Erfindung vergleichsweise einfach und kostengünstig implementiert werden. Die Erfindung kann auch zusammen mit einem Regensensor zur Steuerung bestimmter Fahrerassistenz-Einrichtungen eingesetzt werden, wodurch sich die Zuverlässigkeit bei der Detektion von Feuchtigkeit in einer Fahrzeugumgebung erhöht.

### Kurze Beschreibung der Zeichnungen

Weitere Aspekte und Vorteile der Erfindung werden nunmehr anhand der beigefügten Figuren eingehender beschrieben. Hierbei zeigt:
- Fig. 1: ein mit einem erfindungsgemäßen Fahrerassistenzsystem ausgerüstetes Fahrzeug in einer beispielhaften Fahrsituation;
- Fig. 2: eine schematische Darstellung funktionaler Komponenten des Fahrerassistenzsystems aus Fig. 1; und
- Fig. 3: in Form eines Flussdiagramms einer Arbeitsweise des Fahrerassistenzsystems aus Fig. 2.

### Ausführungsformen der Erfindung

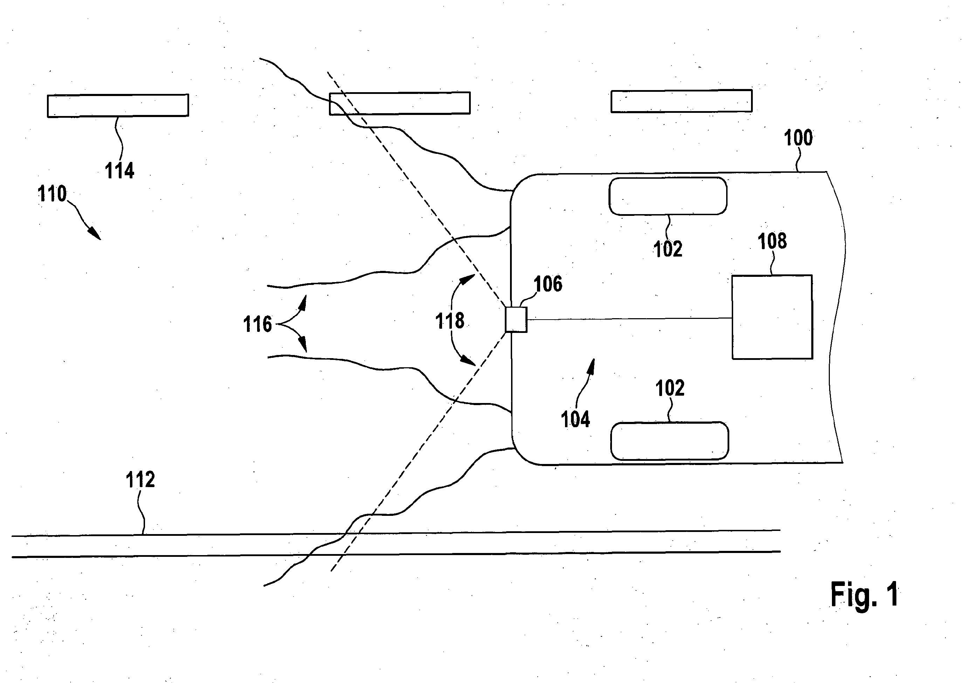

In Fig. 1 ist das Heck eines Fahrzeugs 100 mit Hinterrädern 102 schematisch angedeutet. Das Fahrzeug 100 ist mit einem erfindungsgemäß ausgebildeten Fahrerassistenzsystem 104 ausgerüstet, das u.a. eine Rückfahrkamera 106 sowie eine als ECU ("Electronic Control U-nit") implementierte zentrale Verarbeitungseinheit 108 umfasst. Das Fahrzeug 100 bewegt sich auf einer Fahrbahn 110, die durch eine Seitenbegrenzung 112 sowie Leitlinien 114 angedeutet ist. Aufgrund von Nässe auf der Fahrbahn 110 verursachen die Hinterräder 102 des Fahrzeugs 100 jeweils eine Gischtschleppe 116, deren im Blickfeld 118 der Rückfahrkamera 106 liegende Teile von dieser erfasst werden.

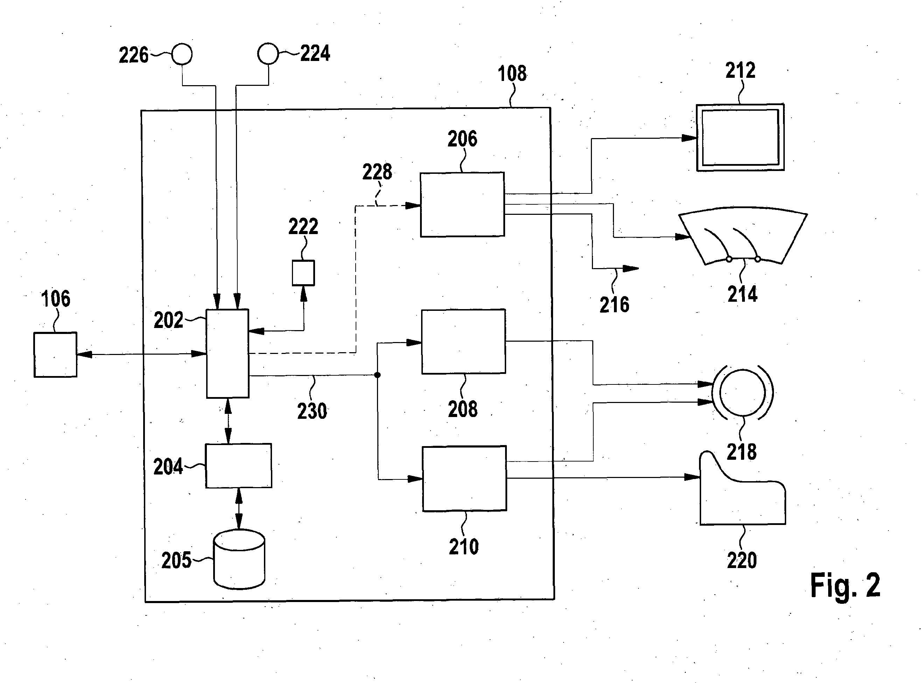

In Fig. 2 sind funktionale Komponenten der ECU 108 des Fahrerassistenzsystems 104 angedeutet. Die ECU 108 umfasst eine Steuerkomponente 202, eine Auswertekomponente 204 sowie Subsysteme 206, 208 und 210. In dem in Fig. 2 dargestellten Beispiel steuert das Subsystem 206 ein HMI ("Human-Machine-Interface") in Form einer Anzeige 212, Scheibenwischer 214 sowie weitere Fahrzeugsysteme wie etwa Scheinwerfer und/oder Klimaanlage, angedeutet durch den Pfeil 216. Das Subsystem 208 umfasst bspw. ABS-Steuerschaltungen, die in an sich bekannter Weise eine Bremsanlage 218 des Fahrzeugs 100 ansteuern. Das Subsystem 210 umfasst die Regelungsschaltungen etwa für ein ESP, die neben der Bremssteuerung 218 auch Signale an eine Motorsteuerung 220 geben.

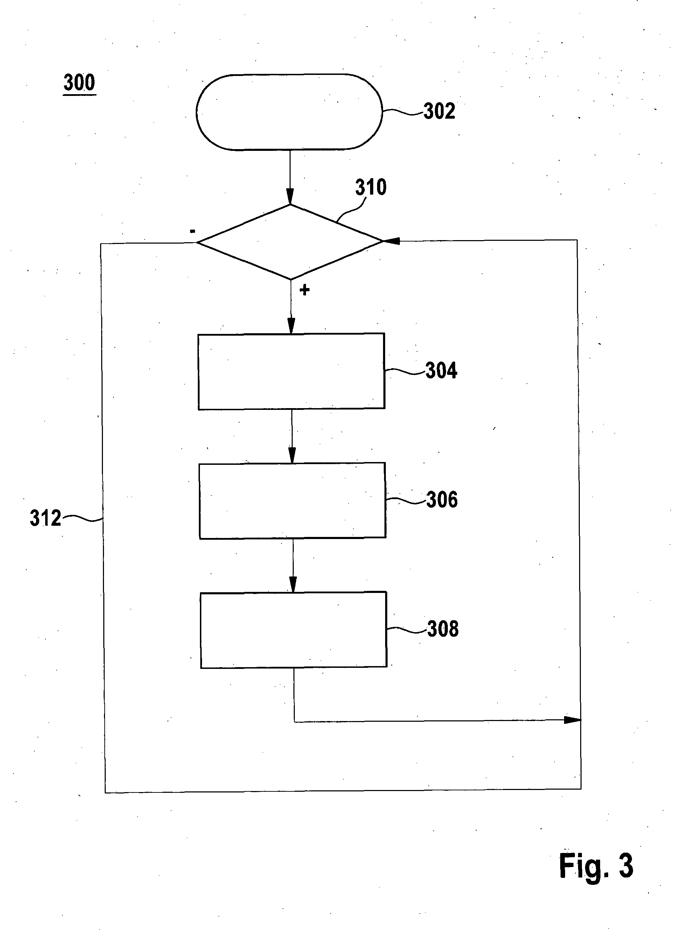

Eine Arbeitsweise der ECU 108 in Fig. 2 wird nachfolgend anhand des Flussdiagramms 300 in Fig. 3 genauer erläutert. Das durchgeführte Verfahren betrifft eine Erkennung von Nässe auf der Fahrbahn 110 in dem beispielhaften Szenario der Fig. 1 sowie die aus dieser Erkennung folgenden Steuerungsaktionen (302).

In Schritt 304 steuert die Komponente 202 die Rückfahrkamera 106 an, um ein Bild des hinter dem Heck gelegenen Bereiches 118 im Blickfeld der Kamera 106 auszunehmen. Das Aufnehmen des Bildes kann in Reaktion auf den Ablauf eines Timers 222 erfolgen, der beispielsweise auf eine Zeitspanne von einer Minute eingestellt ist und von der Steuerkomponente 202 gestartet wird, sobald sich das Fahrzeug 100 in einer Vorwärtsbewegung befindet, die ausreichend ist, um bei nasser Fahrbahn 110 zur Ausbildung der Gischtschleppen 116 zu führen. Dies könnte beispielsweise bei einer Geschwindigkeit von 30 km/h oder mehr der Fall sein. Zusätzlich oder alternativ kann die Steuerkomponente 202 auch Daten eines Regensensors 224 entgegennehmen und den Timer 222 entsprechend setzen. So könnte beispielsweise die Detektion von Regen durch den Sensor 224 bewirken, dass die Rückfahrkamera 106 mit höherer oder niedrigerer Aufnahmefrequenz betrieben wird.

In Schritt 306 wird das im Schritt 304 aufgenommene Bild der Rückfahrkamera 106 auf das Vorhandensein von Gischt ausgewertet. Hierzu übergibt die Steuerkomponente 202 das von der Kamera 106 aufgenommene Bild an die Auswertungskomponente 204. Diese kann das Vorhandensein von einer oder zwei Gischtschleppen im Blickfeld 118 der Kamera basierend auf einem oder mehreren der nachfolgend skizzierten Algorithmen detektieren. Die Algorithmen wie auch ggf. Templates (Vorlagen) für Eigenschaften einer Gischtschleppe wie Überdeckung dahinter gelegener Strukturen, Kontur- und Formeigenschaften zur Identifikation von Gischt in einem Bild können in einem zugeordneten Speicherbereich 205 abgelegt sein:

So kann die Komponente 204 einen Bilderkennungsalgorithmus durchführen, bei dem an vorab festgelegten Bereichen des Bildes, die durch die Lage des Blickwinkels der Kamera 108 in Bezug auf die Hinterräder des Fahrzeugs 100 vorgegeben sind, nach dem Vorhandensein einer Gischtschleppe zu suchen. Gischt zeichnet sich dadurch aus, dass die Sicht auf dahinter liegende Objekte wie beispielsweise die Fahrbahn 110, die Markierungen 112 bzw. 114, nachfolgende Fahrzeuge, etc. ganz oder teilweise verdeckt ist.

Weiterhin kann die Komponente 204 zur Auswertung einer Sequenz von Bildern über einen Zeitraum von beispielsweise einigen Sekunden ausgebildet sein. Aus einer zeitlichen Bildsequenz lässt sich das Vorhandensein einer Gischtschleppe beispielsweise durch dessen zeitlich veränderliche Ausdehnung, Form und/oder Kontur feststellen. Durch das spezifische dynamische Erscheinungsbild unterscheidet sich Gischt beispielsweise von Nebel oder Regen, aber auch kurzzeitigen Störungen wie etwa Abgasfahnen, Nebelschwaden oder dergleichen.

Zusätzlich könnte die Steuerkomponente 202 auch Daten des Geschwindigkeitssensors 226 an die Auswertungskomponente 204 übergeben, um eine beispielsweise von der Geschwindigkeit des Fahrzeugs abhängige Ausdehnung, Form und/oder Kontur einer Störung im Blickfeld der Kamera 106 zu bestimmen und daraus auf das Vorhandensein einer Gischtschleppe zu schließen. Die Daten des Geschwindigkeits- bzw. Radsensors 226 könnte die Steuerkomponente 202 außerdem zu einer geschwindigkeitsabhängigen Einstellung des Timers 222 und damit der Rückfahrkamera 106 verwenden.

Die Komponente 204 gibt ein Auswertungsergebnis an die Komponente 202 zurück. Das Ergebnis kann beispielsweise eine Angabe zum Vorhandensein einer oder zweier Gischtschleppen 116 am Heck des Fahrzeugs betreffen, wie in Fig. 1 dargestellt. Das Ergebnis kann weiterhin auch Angaben zu einer Größe, Stärke bzw. Intensität der Gischtschleppen 116 bzw. des daraus abzuleitenden Grades an Feuchtigkeit oder Nässe auf der Fahrbahn 110 betreffen, oder auch eine zeitlich Veränderung dieser Größen.

Im Schritt 308 gibt die Steuerkomponente 202 mindestens ein Steuersignal 228, 230 an mindestens eines der Subsysteme 206, 208, 210 aus. Das Steuersignal kann auf dem von der Komponente 204 der Steuerkomponente 202 mitgeteilten Auswertungsergebnis unter optionaler Einbeziehung der Daten des Regensensors 224 basieren. Während die Steuerkomponente 202 bei einem einfachen Ausführungsbeispiel nur ein einziges Steuersignal an alle nachgeschalteten Subsysteme ausgeben würde, wird in der Fig. 2 veranschaulicht, dass die Steuerkomponente 202 unterschiedliche Steuersignale 228, 230 an unterschiedliche Subsysteme ausgeben kann.

Für Zwecke der Diskussion wird angenommen, dass der Regensensor 224 keinen Regen meldet und die Scheibenwischer 214 zum momentanen Zeitpunkt inaktiv sind, während die Auswertung des von der Kamera 106 aufgenommenen Bilds ergeben hat, dass die in Fig. 1 angedeuteten Gischtschleppen 116 vorliegen. In Reaktion auf diese Signaleingaben sendet die Steuerkomponente 202 aktuell kein Steuersignal an das Subsystem 206, wie durch die gestrichelte Linie 228 angedeutet wird. Das Ausbleiben eines Steuersignals 228 bedeutet, dass die Scheibenwischer auch weiterhin ausgeschaltet bleiben.

Es ist denkbar, zum Beispiel bei gleichzeitiger Detektion von Regen und Gischtschleppen oder bei sehr stark ausgeprägten Gischtschleppen, das Subsystem 206 zu veranlassen, eine Warnung auf die Anzeige 212 auszugeben. Eine derartige Warnung kann beispielsweise eine Aquaplaninggefahr betreffen.

Als ein weiteres Beispiel für eine Reaktion des Subsystems 206 auf den Erhalt eines Steuersignals 228 sei erwähnt, dass bei Detektion von Regen, einer Gischtschleppe und einer niedrigen Temperatur (hierzu würde bspw. die Steuerkomponente 202 Daten eines nicht gezeigten Temperatursensors berücksichtigen) ein Steuersignal 216 an eine Klimaanlage gegeben werden könnte, die daraufhin konfiguriert wird, um Scheiben des Fahrzeugs 100 beschlagfrei zu halten. Ein Steuersignal 216 könnte auch beispielsweise das Einschalten einer Nebelschlussleuchte am Fahrzeugheck betreffen, die bei stark ausgeprägter Gischtschleppe eingeschaltet werden könnte, sofern dies nach gesetzlichen Bestimmungen zulässig oder vorgeschrieben ist.

Das Steuersignal 230 wird identisch an beide Stabilitätssteuerungen 208 und 210 gegeben (je nach den Konfigurationsmöglichkeiten dieser Steuerungen ist es aber auch denkbar, dass beide Systeme 208 und 210 individuelle Steuersignale erhalten). Jedes der System 208, 210 wird daraufhin konfiguriert, um ggf. zur Erhaltung einer Fahrstabilität in Längsrichtung und/oder Querrichtung das Bremssystem 218 und das Motorsystem 220 des Fahrzeugs 100 unter besonderer Berücksichtigung des nassen Fahrbahnzustandes anzusteuern.

Das Subsystem 210 betrifft dabei im Allgemeinen eine Fahrdynamikregelung, die neben dem Bremssystem 218 auch auf eine Motorsteuerung 220 zugreift (also z.B. ggf. eine Antriebsleistung eines Fahrzeugmotors reduziert), um so eine Stabilität des Fahrzeugs 100 zu erhalten. Somit kann es sich bei dem Subsystem 210 beispielsweise um eine Unterkomponente eines ESP-Systems handeln, wie beispielsweise eine RSC ("Roll Stability Control"), eine Motor-Schleppmoment-Regelung, einen Trailer Stability Assist ("TSA") oder dergleichen. Ein ABS-System sowie Subsysteme eines ESP-Systems, die lediglich auf das Bremssystem 218 einwirken, wie etwa ein elektronischer Bremsassistent ("EBA"), können Teil der Komponente 208 sein.

Während herkömmliche ABS- und ESP-Steuerungen häufig keine speziellen Einstellungen für unterschiedliche Fahrbahnzustände kannten, werden weiterentwickelte Systeme in der Zukunft zunehmend entsprechend anpassbar sein. Hierbei wird es insbesondere auf eine automatische Erkennung eines Fahrbahnzustandes ankommen. Die Erfindung wie hier dargestellt ermöglicht eine automatische Anpassung bspw. eines ABS-Systems 208 und/oder ESP-Systems 210 an einen Fahrbahnzustand.

Im Prinzip ermöglicht die Auswertung von Aufnahmen der Rückfahrkamera 106 neben der Erkennung von Nässe auf der Fahrbahn auch die Detektion andere Fahrbähnzustände, wie beispielsweise eine ganz oder teilweise mit Schnee, Matsch und/oder Schlamm bedeckte Fahrbahn. Da eine Rückfahrkamera zukünftig immer häufiger zur vorhandenen Ausstattung eines Fahrzeugs gehören wird, sind für derartige automatische Anpassungen keine zusätzlichen Einbauten erforderlich, vorausgesetzt die erforderlichen Steuerungen wie die Komponenten 202 und 204 in Fig. 2 werden in Software und/oder Firmware auf einer vorhandenen ECU oder vergleichbaren Verarbeitungskomponente ausgeführt.

Nachdem die Steuerkomponente 202 in Schritt 308 kein Steuersignal, ein Steuersignal oder mehrere Steuersignale 228, 230 an entsprechende der Subsysteme 206, 208 und 210 abgegeben hat, erfolgt in Block 310 eine Auswertung von Bedingungen, die erfüllt sein müssen, um das Verfahren zyklisch erneut zu durchlaufen. Die Entscheidung im Block 310 kann beispielsweise durch erneuten Ablauf des Timers 222 veranlasst werden. Stellt sich heraus, dass zwischenzeitlich beispielsweise eine Fahrzeuggeschwindigkeit unterhalb einer Mindestgeschwindigkeit liegt, wird dennoch die Abfrage zyklisch wiederholt (Pfeil 312). Dieser Ablauf kann bspw. mit der Deaktivierung des Fahrerassistenzsystems bspw. bei einem Ausschalten des Motors enden und kann bei Starten des Motors automatisch wieder aufgenommen werden.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Verfahren in einem Fahrerassistenzsystem eines Fahrzeugs zur Erkennung von Nässe auf einer Fahrbahn, wobei das Fahrerassistenzsystem (104) eine Rückfahrkamera (106) aufweist, mit den folgenden Schritten:
- Aufnehmen (304) eines Bildes eines hinter einem Heck des Fahrzeugs (100) gelegenen Bereiches (118) mit der Rückfahrkamera (106);
- Auswerten (306) des aufgenommenen Bildes auf das Vorhandensein einer vom Fahrzeug (100) hervorgerufenen Gischtschleppe (116); und
- selektives Ausgeben (308), basierend auf der Auswertung, eines Nässesignals (228, 230) zum Auslösen einer automatischen Reaktion des Fahrerassistenzsystems (104, 206, 208, 210) auf die nasse Fahrbahn (110), wobei die automatische Reaktion mindestens eines der folgenden Subsysteme (208, 210) des Fahrerassistenzsystems (104,108) betrifft: Antiblockiersystem, Antriebsschlupfregelung, Elektronisches Stabilitätsprogramm, elektronischer Bremsassistent, Fahrdynamikregelungssysteme, Elektronische Stabilitätssteuerungen.

2. Verfahren nach Anspruch 1, wobei die automatische Reaktion zusätzlich mindestens eine der folgenden Fahrzeugkomponenten betrifft: Scheibenwischer (214), Fahrzeugscheinwerfer, Fahrzeugfenster, Klimaanlage.

3. Verfahren nach einem der vorhergehenden Ansprüche, wobei die automatische Reaktion zusätzlich die Ausgabe einer Warnung (212) an den Fahrer betrifft, dass die Fahrbahnnässe einen vorgegebenen Schwellenwert überschritten hat.

4. Verfahren nach einem der vorhergehenden Ansprüche, wobei das Aufnehmen (304) des Bildes in Reaktion auf eine Detektion mindestens eines der folgenden Ereignisse initiiert wird: Erreichen einer regelmäßigen Zeitmarke, Eintreffen eines Signals eines Regensensors (224), Detektion einer Vorwärtsbewegung des Fahrzeugs oberhalb einer vorbestimmten Geschwindigkeit.

5. Verfahren nach einem der vorhergehenden Ansprüche, wobei die Detektion der vom Fahrzeug (100) hervorgerufenen Gischtschleppe (116) über eine Auswertung des Bildes oder einer Sequenz zeitlich aufeinanderfolgender von der Rückfahrkamera aufgenommener Bilder basierend auf mindestens einer der folgenden Charakteristika einer Gischtschleppe erfolgt: Lokale Ausdehnung der Gischtschleppe im Gegensatz zu einer globalen Bildbeeinflussung durch Nebel oder Regen; zeitlich veränderliche Ausdehnung, Form und/oder Kontur; von einer Geschwindigkeit des Fahrzeugs abhängige Ausdehnung, Form und/oder Kontur.

6. Verfahren nach einem der vorhergehenden Ansprüche, wobei die Ausgabe (308) des Nässesignals (228, 230) basierend auf der Auswertung des von der Rückfahrkamera (106) aufgenommenen Bildes und eines Signals eines Regensensors (224) erfolgt.

7. Computerprogramm zur Durchführung des Verfahrens nach einem der vorhergehen den Ansprüche, wenn das Computerprogramm auf einer programmierbaren Computereinrichtung ausgeführt wird.

8. Fahrerassistenzsystem (104) in einem Fahrzeug (100) ausgebildet zur Erkennung von Nässe auf einer Fahrbahn (110), mit den folgenden Komponenten:
- einer Rückfahrkamera (106) zum Aufnehmen eines Bildes eines hinter einem Heck des Fahrzeugs (100) gelegenen Bereiches (118);
- einer Komponente (204, 205) zum Auswerten des aufgenommenen Bildes auf das Vorhandensein einer vom Fahrzeug (100) hervorgerufenen Gischtschleppe (116); und
- einer Komponente (202) zum selektiven Ausgeben, basierend auf der Auswertung, eines Nässesignals (228, 230) zum Auslösen einer automatischen Reaktion des Fahrerassistenzsystems auf die nasse Fahrbahn (110).

## Claims

1. Method in a driver assistance system of a vehicle for detecting wetness on a carriageway, wherein the driver assistance system (104) has a rear view camera (106), having the following steps:
- recording (304) an image of a region (118) positioned behind a rear part of the vehicle (100) with the rear view camera (106);
- evaluating (306) the recorded image for the presence of a trail of spray (116) caused by the vehicle (100); and
- selective outputting (308), on the basis of the evaluation, of a wetness signal (228, 230) for triggering an automatic reaction of the driver assistance system (104, 206, 208, 210) to the wet carriageway (110), wherein the automatic reaction of at least one of the following sub-systems (208, 210) of the driver assistance system (104, 108) relates to: an anti-lock brake system, traction drive control system, electronic stability programme, electronic braking assistant, vehicle dynamics control systems, and electronic stability controllers.

2. Method according to Claim 1, wherein the automatic reaction additionally relates to at least one of the following vehicle components: windscreen wiper (214), vehicle headlight, vehicle window, and air-conditioning system.

3. Method according to one of the preceding claims, wherein the automatic reaction additionally relates to the outputting of a warning (212) to the driver that the wetness on the carriageway has exceeded a predefined threshold value.

4. Method according to one of the preceding claims, wherein the recording (304) of the image is initiated in reaction to a detection of at least one of the following events: the reaching of a regular time marker, arrival of a signal of a rain sensor (224), detection of a forward movement of the vehicle above a predetermined speed.

5. Method according to one of the preceding claims, wherein the detection of the trail of spray (116) caused by the vehicle (100) is carried out by evaluating the image or a sequence of chronologically successive images recorded by the rear view camera, on the basis of at least one of the following characteristics of a trail of spray: local extent of the trail of spray in contrast to global influencing of the image by fog or rain; chronologically variable extent, shape and/or contour; extent, shape and/or contour dependent on a speed of the vehicle.

6. Method according to one of the preceding claims, wherein the outputting (308) of the wetness signal (228, 230) is carried out on the basis of the evaluation of the image recorded by the rear view camera (106) and of a signal of a rain sensor (224).

7. Computer program for carrying out the method according to one of the preceding claims when the computer program is executed on a programmable computer device.

8. Driver assistance system (104) in a vehicle (100) designed to detect wetness on a carriageway (110), having the following components:
- a rear view camera (106) for recording an image of a region (118) positioned behind a rear part of the vehicle (100);
- a component (204, 205) for evaluating the recorded image for the presence of a trail of spray (116) caused by the vehicle (100);
and
- a component (202) for selectively outputting, on the basis of the evaluation, a wetness signal (228, 230) for triggering an automatic reaction of the driver assistance system to the wet carriageway (110).

## Revendications

1. Procédé prévu dans un système d'aide à la conduite d'un véhicule pour détecter la présence d'humidité sur une voie de circulation, le système d'aide à la conduite (104) comportant une caméra de marche arrière (106), avec les étapes suivantes :
- prise (304) d'une image d'une zone (118) placée derrière l'arrière d'un véhicule (100) avec la caméra de marche arrière (106) ;
- analyse (306) de l'image prise pour vérifier la présence d'une traîne d'eau (116) soulevée par le véhicule (100) ; et
- émission sélective (308), sur la base de l'analyse, d'un signal d'humidité (228, 230) en vue de déclencher une réaction automatique du système d'aide à la conduite (104, 206, 208, 210) sur la voie de circulation mouillée (110), la réaction automatique concernant au moins un des sous-systèmes (208, 210) suivants du système d'aide à la conduite (104, 108) : système d'antiblocage, régulation de patinage à l'entraînement, programme de stabilité électronique, assistant de freinage électronique, systèmes de réglage de dynamique de conduite, commandes de stabilité électronique.

2. Procédé selon la revendication 1, la réaction automatique concernant en outre au moins un des composants de véhicule suivants : essuie-glace (214), phares de véhicule, fenêtres de véhicule, installation de climatisation.

3. Procédé selon l'une quelconque des revendications précédentes, la réaction automatique concernant en outre l'envoi d'un avertissement (212) au conducteur indiquant que l'humidité de voie de circulation a dépassé une valeur seuil prédéfinie.

4. Procédé selon l'une quelconque des revendications précédentes, la prise (304) de l'image étant déclenchée en réaction à une détection d'au moins un des événements suivants : atteinte d'un repère de temps régulier, entrée d'un signal d'un capteur de pluie (224), détection d'un mouvement avant du véhicule au-delà d'une vitesse prédéterminée.

5. Procédé selon l'une quelconque des revendications précédentes, la détection de la traîne d'eau (116) soulevée par le véhicule (100) se produisant via une analyse de l'image ou une séquence d'images successives dans le temps prises par la caméra de marche arrière sur la base d'au moins une des caractéristiques suivantes d'une traîne d'eau : taille locale de la traîne d'eau en contradiction avec un brouillage global d'image dû à la présence de brouillard ou de pluie ; taille, forme et/ou contour variables dans le temps ; taille, forme et/ou contour dépendant d'une vitesse du véhicule.

6. Procédé selon l'une quelconque des revendications précédentes, l'envoi (308) du signal d'humidité (228, 230) se produisant sur la base de l'analyse de l'image prise par la caméra de marche arrière (106) et d'un signal d'un capteur de pluie (224).

7. Programme informatique servant à la mise en oeuvre du procédé selon l'une quelconque des revendications précédentes, lorsque le programme informatique est réalisé sur un ordinateur programmable.

8. Système d'aide à la conduite (104) dans un véhicule (100) réalisé pour détecter la présence d'humidité sur une voie de circulation (110), avec les composants suivants :
- une caméra de marche arrière (106) servant à la prise d'une image derrière la zone (118) située à l'arrière du véhicule (100) ;
- un composant (204, 205) servant à l'analyse de l'image prise pour vérifier la présence d'une traîne d'eau (116) soulevée par le véhicule (100) ; et
- un composant (202) servant à l'émission sélective, sur la base de l'analyse, d'un signal d'humidité (228, 230) en vue de déclencher une réaction automatique du système d'aide à la conduite sur la voie de circulation mouillée (110).
